(19) Europäisches Patentamt
European Patent Office
Office européen des brevets

(11) EP 3 804 980 A1

(12) EUROPEAN PATENT APPLICATION
published in accordance with Art. 153(4) EPC

(43) Date of publication:
14.04.2021 Bulletin 2021/15

(51) Int Cl.:
$B32B\ 7/022^{(2019.01)}$        $B32B\ 27/34^{(2006.01)}$
$B65D\ 65/40^{(2006.01)}$        $C08L\ 77/00^{(2006.01)}$

(21) Application number: 19811806.9

(22) Date of filing: 22.04.2019

(86) International application number:
PCT/JP2019/016991

(87) International publication number:
WO 2019/230255 (05.12.2019 Gazette 2019/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 01.06.2018 JP 2018106214

(71) Applicant: Kureha Corporation
Chuo-ku
Tokyo 103-8552 (JP)

(72) Inventors:
• NAMBU Shota
Tokyo 103-8552 (JP)
• KITADA Ichiro
Tokyo 103-8552 (JP)

(74) Representative: Hoefer & Partner Patentanwälte
mbB
Pilgersheimer Straße 20
81543 München (DE)

(54) HEAT SHRINKABLE MULTILAYER FILM

(57) Provided is a heat-shrinkable multilayer film having high strength and excellent followability to its contents.

The heat-shrinkable multilayer film according to the present invention is composed of at least three layers of a surface layer (a) including a thermoplastic resin; an intermediate layer (b) including a polyamide-based resin; and a surface layer (c) including a sealable resin. (A) The load per unit width at 10% elongation is 0.70 N/mm or less in both a longitudinal direction (MD) and a transverse direction (TD) in a tensile test at 90°C. (B) The puncture strength per unit thickness is 0.200 N/μm or greater.

[FIG. 1]

EP 3 804 980 A1

**Description**

**TECHNICAL FIELD**

The present invention relates to a heat-shrinkable multilayer film.

**BACKGROUND ART**

As package processing techniques for foods such as fresh meat, ham, and sausages, and other products, techniques, in which a heat-shrinkable multilayer film is formed into a bag or pouch and then filled with contents, or either the contents as is or loaded on a tray are automatically packaged during bag-forming processing, have been widely used in the related art. Because various properties are required in such packaging films, the intended properties are imparted by multilayer configurations. For example, a heat-shrinkable laminate packaging film in which a film formed from a vinylidene chloride-based copolymer composition having excellent extrusion properties, barrier properties, and transparency after heat shrinkage is used as a barrier layer is known (Patent Document 1).

**CITATION LIST**

[Patent Document]

Patent Document 1: JP 2002-220504 A

**SUMMARY OF INVENTION**

[Technical Problem]

In particular, strength is required of films that package contents including hard and sharp parts, such as meat on the bone. In addition, such contents are often irregular in shape. And thus, when a vacuum-packaged film is shrunk by heat so as to be fitted to its contents, it is typically difficult for the film to follow the surface irregularities of the contents. Insufficient followability of the film significantly deteriorates the product appearance, so that deaeration may be determined to be poor, or that problems may arise such as generation of pinholes due to vibration of the contents during transportation. Thus, in such applications, the balance between "strength" and "followability" is essential.
The present invention has been made in light of the above problems, and an object of the present invention is to provide a heat-shrinkable multilayer film having high strength and excellent followability to its contents.

[Solution to Problem]

The present inventors have found that the above-described problems can be solved by a heat-shrinkable multilayer film including an intermediate layer (b) including a polyamide-based resin, in which each of a predetermined load and a predetermined puncture strength satisfies a specific range, and completed the present invention.
The heat-shrinkable multilayer film according to the present invention is composed of at least three layers: a surface layer (a) including a thermoplastic resin; an intermediate layer (b) including a polyamide-based resin; and a surface layer (c) including a sealable resin, wherein (A) a load per unit width at 10% elongation is 0.70 N/mm or less in both a longitudinal direction (MD) and a transverse direction (TD) in a tensile test at 90°C, and (B) a puncture strength per unit thickness is 0.200 N/$\mu$m or greater.
In the heat-shrinkable multilayer film, a shrinkage rate in hot water at 90°C is 33% or less in both the longitudinal direction (MD) and the transverse direction (TD), and a thickness of the intermediate layer (b) is 15 $\mu$m or greater and 50 $\mu$m or less.
In the heat-shrinkable multilayer film, the polyamide-based resin in the intermediate layer (b) is composed of a mixture containing a Nylon 6-66 copolymer and an amorphous aromatic polyamide, the amorphous aromatic polyamide contains a polycondensate of an acid component primarily containing isophthalic acid and terephthalic acid with an aliphatic diamine, and an amorphous aromatic polyamide content in the intermediate layer (b) ranges from 25 to 40 mass%.

[Advantageous Effects of Invention]

The heat-shrinkable multilayer film of the present invention has high strength and excellent followability to its contents. Therefore, the heat-shrinkable multilayer film of the present invention can be suitably used as a variety of packaging materials including food packaging materials, based on the following facts: firstly, it has excellent pinhole resistance even when used to package shape-indefinite contents including hard and sharp parts; and, secondly, it suppresses the movement of its contents due to vibration during transportation, and has less portions floating from the contents and provides good product appearance.

**BRIEF DESCRIPTION OF THE DRAWINGS**

FIG. 1 is a schematic diagram illustrating an apparatus for producing the heat-shrinkable multilayer film of the present invention.
FIG. 2 is a diagram illustrating an acrylic tool used in a method of evaluating the followable length.
FIG. 3 is a diagram illustrating how to place the acrylic tool in a pouch bag in the method of evaluating the followable length.

**DESCRIPTION OF EMBODIMENTS**

The heat-shrinkable multilayer film of the present invention is composed of at least three layers of a surface layer: (a) including a thermoplastic resin; an intermediate layer (b) including a polyamide-based resin; and a surface layer (c) including a sealable resin, wherein (A) a load per unit width at 10% elongation is 0.70 N/mm or less in both a longitudinal direction (MD) and a transverse direction (TD) in a tensile test at 90°C, and (B) a puncture strength per unit thickness is 0.200 N/$\mu$m or greater. Typically, the surface layer (a) corresponds to an outer surface layer, and the surface layer (c) corresponds to an inner surface layer.

The load described in the above item (A) is preferably 0.65 N/mm or less, more preferably 0.61 N/mm or less in both the longitudinal direction (MD) and the transverse direction (TD), because excellent followability to its contents is easily obtained. The lower limit of the load is not particularly limited, and may be, for example, 0.1 N/mm or more, 0.2 N/mm or greater, 0.3 N/mm or greater, 0.4 N/mm or greater, or 0.45 N/mm or greater. Note that, in the present specification, the "load" refers to a value measured by a method which will be described in the Examples.

The puncture strength described in the above item (B) is preferably 0.250 N/$\mu$m or greater, more preferably 0.262 N/$\mu$m or greater, because a high-strength heat-shrinkable multilayer film is easily obtained. The upper limit of the puncture strength is not particularly limited, and may be, for example, 1.000 N/$\mu$m or less, 0.800 N/$\mu$m or less, 0.600 N/$\mu$m or less, 0.500 N/$\mu$m or less, 0.400 N/$\mu$m or less, or 0.384 N/$\mu$m or less. Note that, in the present specification, the "puncture strength" refers to a value measured by the method which will be described in the Examples.

The thermoplastic resin constituting the surface layer (a) is, for example, a resin that has appropriate stretchability in a laminated state with the intermediate layer (b) including a polyamide-based resin and prevents water from permeating into the intermediate layer (b), and is preferably a thermoplastic resin other than the polyamide-based resin, more specifically a thermoplastic resin having a smaller hygroscopicity than that of the polyamide-based resin. Examples of preferred thermoplastic resins include thermoplastic resins conventionally widely used for the formation of laminated films of polyamide-based resins, more particularly linear low density polyethylene (LLDPE), very low density polyethylene (VLDPE), and low density polyethylene (LDPE) (these polyethylenes include, in addition to polyethylenes obtained using a known catalyst (Ziegler-Natta catalyst), those polymerized using a single site catalyst (metallocene catalyst)), and polyolefin-based resins such as polypropylene, propylene-ethylene copolymers, propylene-ethylene-butene-1 copolymers, ethylene-vinyl acetate copolymers, ethylene-acrylic acid copolymers, ethylene-methacrylic acid copolymers, and ethylene-ethyl acrylate copolymers (a comonomer component other than the olefin of the copolymers is contained in a relatively small amount (less than 50 mass%)). Additionally, polyester-based resins and the like are also used. Among these resins, polyester-based resins have excellent surface properties such as transparency, surface hardness, printability, and heat resistance, and are particularly preferred materials for the surface layer (a) in the present invention.

As the polyester-based resin ("PET") constituting the surface layer (a), an aliphatic polyester-based resin and an aromatic polyester-based resin are both used. The dicarboxylic acid component used in the polyester-based resin may be one by which polyester is obtained by an ordinary production method, and, in addition to terephthalic acid and isophthalic acid, examples thereof include dimer acids comprising a dimer of an unsaturated fatty acid, adipic acid, oxalic acid, malonic acid, succinic acid, azaleic acid, sebacic acid, phthalic acid, 5-t-butylisophthalic acid, naphthalene dicarboxylic acid, diphenylether dicarboxylic acid, cyclohexane dicarboxylic acid, and the like. A single dicarboxylic acid component may be used, or two or more dicarboxylic acid components may be used in combination. The diol component used in the polyester-based resin may be one by which polyester is obtained by an ordinary production method, and examples include ethylene glycol, propylene glycol, tetramethylene glycol, neopentyl glycol, hexamethylene glycol, diethylene glycol, polyalkylene glycol, 1,4-cyclohexane dimethanol, and 2-alkyl-1,3-propanediol. A single diol component may be used, or two or more diol components may be used in combination.

Preferred among these is an aromatic polyester-based resin containing an aromatic dicarboxylic acid component, and particularly preferred is a polyester containing terephthalic acid as the dicarboxylic acid component and a diol having up to 10 carbons, for example, polyethylene terephthalate, polybutylene terephthalate, or the like. A copolymer polyester in which preferably up to 30 mol%, more preferably up to 15 mol%, of the terephthalic acid is substituted with another dicarboxylic acid such as isophthalic acid or a copolymer polyester resin in which some of the diol component such as ethylene glycol is substituted with another diol such as 1,4-cyclohexanediol (for example, "Kodapak PET#9921 available from Eastman Kodak Company) is also preferably used. A single polyester-based resin may be used, or two or more different polyester-based resins may also be used as a mixture.

The polyester-based resin used preferably has a limiting viscosity from approximately 0.6 to 1.2. The outer surface layer (a) may also contain up to 20 mass% of a thermoplastic resin other than a polyester-based resin, such as a thermoplastic elastomer typified by thermoplastic polyurethane, or a polyolefin-based resin modified with an acid such as maleic acid or anhydride thereof. The surface layer (a) including a thermoplastic resin may be thinner than the intermediate layer (b) and have a thickness of, for example, 3% or greater and 70% or less of the thickness of the intermediate layer (b) in order that the excellent stretchability and mechanical properties of the intermediate layer (b) including a polyamide-based resin are maintained. Particularly, the surface layer (a) preferably has a thickness of 6% or greater and 50% or less (for example, 6% or greater and less than 50%) of the thickness of the intermediate layer (b).

Examples of the polyamide-based resin ("PA") constituting the intermediate layer (b) can include aliphatic polyamide polymers such as Nylon 6, Nylon 66, Nylon 11, Nylon 12, Nylon 69, Nylon 610, and Nylon 612; and aliphatic polyamide copolymers such as Nylon 6-66, Nylon 6-69, Nylon 6-610, Nylon 66-610, and Nylon 6-12. Among these, Nylon 6-66 and Nylon 6-12 are particularly preferred from the viewpoint of processability. The ratio of Nylon 66 in the Nylon 6-66 copolymer may be from 5 to 30 mass%, and is preferably from 10 to 20 mass% in terms of processability.

These aliphatic polyamide (co)polymers can be used alone, or two or more thereof can be used as a blend. In addition, a blend of such an aliphatic polyamide (co)polymer as a main component with an amorphous aromatic polyamide, specifically, a mixture containing, for example, a Nylon 6-66 copolymer and an amorphous aromatic polyamide is also used. As the amorphous aromatic polyamide, an amorphous aromatic polyamide which contains a polycondensate of an acid component primarily containing isophthalic acid and terephthalic acid with an aliphatic diamine is used, and the polycondensate described above is particularly preferably used. As the acid component, a mixture containing from 40 to 98 mol% of the isophthalic acid component and from 2 to 60 mol% of the terephthalic acid component is preferably used. Other acid components such as adipic acid can also be contained according to need as long as the above ranges of the amounts of the isophthalic acid and terephthalic acid components are maintained. Note that, in the acid component primarily containing isophthalic acid and terephthalic acid, the total amount of isophthalic acid and terephthalic acid is, for example, from 50 to 100 mol%, and may be from 60 to 100 mol%, from 70 to 100 mol%, or from 80 to 100 mol% (e.g., from 90 to 100 mol%, from 95 to 100 mol%, from 98 to 100 mol%, 100 mol%, etc.). As the aliphatic diamine, hexamethylene diamine is preferably used alone or as a mixture with bis(p-aminocyclohexylmethane) as a small-amount component. From the perspective of versatility, an amorphous Nylon copolymer commonly known as Nylon 6I-6T (Ny6I-6T), in which the aliphatic diamine comprises hexamethylene only, is preferred. These amorphous aromatic polyamides generally have a glass transition point (Tg) of approximately from 90 to 135°C. Examples of commercially available products include "GRIVORY G21" (Tg = 125°C) available from EMS and "SELAR PA3426" (Tg = 127°C) available from DuPont.

The amorphous aromatic polyamide content of the polyamide-based resin constituting the intermediate layer (b) is sufficiently from 25 to 40 mass%, preferably from 30 to 40 mass%. In a case where the amorphous aromatic polyamide content is 25 mass% or greater, the load per unit width at 10% elongation is less likely to increase, so that sufficient followability is easily obtained. On the other hand, if the amorphous aromatic polyamide content is 40 mass% or less, sufficient puncture strength is easily obtained.

The surface layer (c) contains a sealable resin. However, if the sealable resin is selected focusing only on the sealing strength, the desired high followability may not be obtained. It is preferable that satisfactory puncture strength, seal strength and heat resistance should be obtained in addition to high followability, for example, at ambient temperatures where the multilayer film bag is filled with contents and at high temperatures where it is heat-shrunk or heat-sterilized. The sealable resin is, for example, an ethylene-$\alpha$-olefin copolymer, and is preferably an ethylene-$\alpha$-olefin copolymer essentially having a density of less than 0.917 g/cm$^3$. The term "essential" as used herein means that a mixture of such a resin as a main component (55 mass% or more) with any other resin may be used within a range in which the followability, puncture strength, sealing strength and heat resistance are obtained. If the density of the ethylene-$\alpha$-olefin copolymer is less than 0.917 g/cm$^3$, it is easy to obtain the desired high followability. The density of the ethylene-$\alpha$-olefin copolymer is preferably 0.916 g/cm$^3$ or less, and, from the viewpoint of sealing strength and heat resistance, is preferably 0.890 g/cm$^3$ or greater, and more preferably, 0.902 g/cm$^3$ or greater. Examples of the ethylene-$\alpha$-olefin copolymer include SSC-VLDPE and SSC-LLDPE polymerized using a single site catalyst ("SSC") and known VLDPE and LLDPE, and those having a density in the range of less than 0.917 g/cm$^3$ are used in the present invention. A single ethylene-$\alpha$-olefin copolymer may be used, or two or more of ethylene-$\alpha$-olefin copolymers may be mixed as necessary. In addition, ethylene-α-olefin copolymers, EVA, EAA, EMA, EEA, EBA, and the like are used as the resin containing such a resin as a main component and capable of being mixed with any other resin. Examples of ethylene-α-olefin copolymers polymerized using a single site catalyst include "EXACT" from EXXON; "Affinity" and "Elite" from The Dow Chemical Company; "Yumerit" from Ube Industries, Ltd.; "Evolue" from Mitsui Chemicals, Inc.; "Kernel" from Japan Polychem Corporation; and "Harmorex" from Japan Polyolefins Corporation. Examples of known ethylene-α-olefin copolymers include "Attain" and "Dowrex" from The Dow Chemical Company. Hereinafter, the sealable resin may be referred to as "sealing resin".

The heat-shrinkable multilayer film of the present invention includes a surface layer (a) including the thermoplastic resin, an intermediate layer (b) including a polyamide-based resin, and a surface layer (c) including a sealable resin as an essential constituent layers, and can additionally include an intermediate layer other than the intermediate layer (b), according to need, for improving the functionality or processability of the product multilayer film. Examples of such an intermediate layer will be indicated below.

Examples of the gas barrier resin constituting a gas-barrier interlayer (d) can include, particularly as those used in an oxygen gas barrier layer, known EVOH, aromatic polyamides having an aromatic diamine such as polymetaxylene adipamide ("Nylon MXD6"), and amorphous aromatic polyamide having an aromatic carboxylic acid such as polyhexamethylene isophthalamide/terephthalamide ("Nylon 6I-6T") which is a copolymer of isophthalic acid, terephthalic acid and hexamethylene diamine. A preferred resin constituting another intermediate layer is a copolymer of at least one monomer containing an oxygen atom in the molecule with ethylene. Specifically, there are indicated: ethylene-vinyl acetate copolymer (EVA), ethylene-methacrylic acid copolymer (EMAA), ethylene-methyl methacrylate copolymer (EMMA), ethylene-methyl acrylate copolymer (EMA), ethylene-acrylic acid copolymer (EAA), ethylene-butyl acrylate copolymer (EBA), ionomer (IO) resin, and the like.

The adhesive resin layer can be provided as an intermediate layer according to need, for example, in the case where the adhesive strength between the respective layers is not sufficient, and the resin constituting another intermediate layer can also be selected and used. More preferably, EVA, EEA, EAA, an acid-modified polyolefin (a reaction product of a homopolymer or a copolymer of olefins and the like with an unsaturated carboxylic acid such as maleic acid or fumaric acid, an acid anhydride, an ester, or a metal salt, for example, an acid-modified VLDPE, an acid-modified LLDPE, and an acid-modified EVA) may be used as the adhesive resin. A suitable example is an olefin-based resin modified with an acid such as maleic acid or an anhydride thereof or the like.

Further, a lubricant, an antistatic agent, or the like can be added to any of the layers. Examples of the lubricant to be used include hydrocarbon-based lubricants, fatty acid-based lubricants, fatty acid amide-based lubricants, ester-based lubricants, and metal soaps. The lubricants may be in liquid or solid form. Specific examples of the hydrocarbon-based lubricant include liquid paraffin, natural paraffin, polyethylene wax, and microwax. Examples of the fatty acid-based lubricant include stearic acid and lauric acid. Examples of the fatty amide lubricant include a stearic acid amide, a palmitic acid amide, an N-oleyl palmitic acid amide, a behenic acid amide, an erucic acid amide, an arachidic acid amide, an oleic acid amide, a methylene bisstearamide, and an ethylene bisstearamide. Examples of the ester-based lubricant include butyl stearate, hydrogenated castor oil, ethylene glycol monostearate, and stearic acid monoglyceride. The metal soap is derived from a fatty acid having from 12 to 30 carbon atoms, and examples thereof include zinc stearate and calcium stearate. Among these lubricants, fatty acid amide-based lubricants and metal soaps are preferred due to their miscibility with polyolefin resin. As a preferred example of the lubricant, a behenic acid amide, an oleic acid amide, or an erucic acid amide is added in the form of a masterbatch. In the case where the masterbatch contains 20 mass% of a lubricant, a preferred amount thereof to be added ranges from 1 to 10 mass% in the above layer.

As an antistatic agent, a surfactant is preferably used. As the surfactant, an anionic surfactant, a cationic surfactant, a nonionic surfactant, an amphoteric surfactant, or a mixture thereof can be used. The antistatic agent is preferably added in an amount from 0.05 to 2 mass%, further preferably from 0.1 to 1 mass% relative to the resin of the layer to which it is added.

Preferred aspect examples of the layer configuration of the heat-shrinkable multilayer film according to an embodiment of the present invention will be described. However, these examples are merely illustrative, and the present invention is not limited only to these examples:

(1) Polyester resin/adhesive resin/polyamide resin/adhesive resin/sealing resin
(2) Polyester resin/adhesive resin/polyamide resin/gas barrier resin/adhesive resin/sealing resin
(3) Polyester resin/adhesive resin/polyamide resin/adhesive resin/gas barrier resin/adhesive resin/sealing resin
(4) Polyester resin/adhesive resin/polyamide resin/adhesive resin/gas barrier resin/adhesive resin/polyamide resin/adhesive resin/sealing resin
(5) Polyester resin/adhesive resin/polyamide resin/gas barrier resin/polyamide resin/adhesive resin/sealing resin
(6) Polyolefin resin/adhesive resin/polyamide resin/adhesive resin/sealing resin
(7) Polyolefin resin/adhesive resin/polyamide resin/gas barrier resin/adhesive resin/sealing resin
(8) Polyolefin resin/adhesive resin/polyamide resin/adhesive resin/gas barrier resin/adhesive resin/sealing resin

(9) Polyolefin resin/adhesive resin/polyamide resin/adhesive resin/gas barrier resin/adhesive resin/polyamide resin/adhesive resin/sealing resin
(10) Polyolefin resin/adhesive resin/polyamide resin/gas barrier resin/polyamide resin/adhesive resin/sealing resin

The heat-shrinkable multilayer film of the present invention is preferably formed as a multilayer film having a final thickness from 30.5 to 250 μm, especially from 40 to 150 μm, by laminating, stretching and relaxing the above layers. In addition, it is preferable that the total thickness should be from 60 to 250 μm, especially from 60 to 150 μm, for meat on the bone having sharply cut bones and particularly requiring high pinhole properties.

More specifically, the thickness of the surface layer (a) including a thermoplastic resin is sufficiently from 0.5 to 25 μm, especially from 1 to 15 μm, and the thickness of the intermediate layer (b) including a polyamide-based resin is preferably from 15 to 50 μm, more preferably from 20 to 25 μm. If the thickness of the intermediate layer (b) is 15 μm or greater, the shrinkage rate in hot water of the multilayer film is less likely to increase, and the followability is less likely to be deteriorated. On the other hand, if the thickness is 50 μm or less, sufficient shrinkage rate in hot water is easily obtained, so that wrinkles are less likely to be generated in the film.

The surface layer (c) including a sealing resin preferably has a thickness in the range from 10 to 150 μm, especially from 15 to 100 μm. In particular, when the surface layer (a) is a polyester-based resin, the thickness of the layer (a) is smaller than that of the layer (b), and, more specifically, the former is preferably set within the range from 3 to 70%, especially from 6 to 50% of the latter in order to harmonize the biaxial stretchability.

The thickness of the optional gas barrier resin layer (d) is, for example, in the range from 1 to 30 μm, preferably in the range from 2 to 15 μm. In a case where the thickness of the gas barrier resin layer is 1 μm or greater, the oxygen gas barrier improvement effect is less likely to be poor, and if the thickness is 30 μm or less, it is not difficult to extrude the layer and to stretch the multilayer film. Only one adhesive resin layer can be provided, or a plurality of adhesive resin layers can be provided. The thickness of the adhesive resin layer is not particularly limited, and is suitably in the range from 0.3 to 5 μm.

The shrinkage rate in hot water at 90°C of the heat-shrinkable multilayer film of the present invention is preferably 33% or less in both the longitudinal direction (MD) and the transverse direction (TD). The lower limit is not particularly limited, but is preferably 5% or greater, more preferably 10% or greater, further preferably 20% or greater, since wrinkles are easily generated in the film when the shrinkage rate in hot water is too low. Note that, in the present specification, the "shrinkage rate in hot water" refers to a value measured by the method which will be described in the Examples.

The heat-shrinkable multilayer film of the present invention is preferably produced by an inflation method, and a preferred aspect thereof will be described.

Method of producing heat-shrinkable multilayer film

The heat-shrinkable multilayer film according to an embodiment of the present invention is produced, for example, by laminating and stretching the layers.

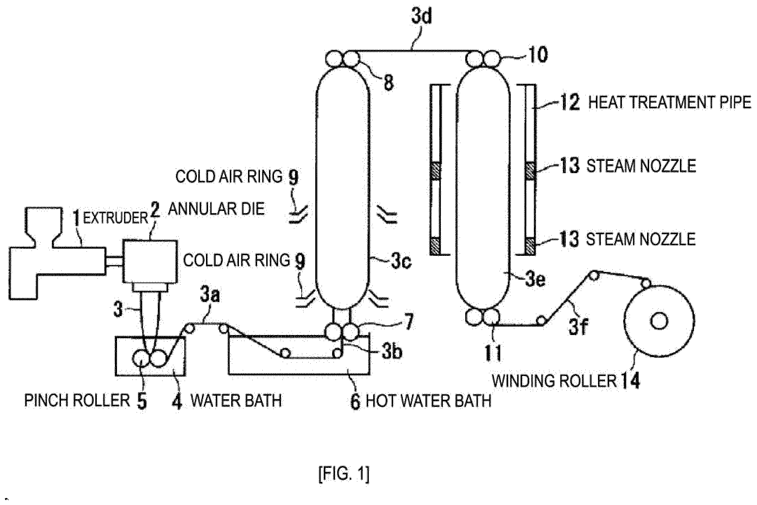

The heat-shrinkable multilayer film according to an embodiment of the present invention can be produced by using, for example, an apparatus illustrated in FIG. 1. In the apparatus illustrated in FIG. 1, for example, a tubular body (parison) 3 including an outer surface layer, an intermediate layer, and an inner surface layer is co-extruded through an annular die 2 from a number of extruders 1 (only one extruder is illustrated) corresponding to the number of types of laminated resins that constitute the multilayer film. During the co-extrusion of the tubular body 3, a deblocking agent represented by soybean oil, a fatty acid ester of glycerin, propylene glycol, and the like is enclosed as necessary. The melted tubular body 3 immediately after co-extrusion is flattened and taken up by a pinch roller 5 while being cooled in a water bath 4 to a temperature equal to or lower than the melting point of the resin primarily included in each of the layers, preferably to 20°C or lower, and more preferably to 15°C or lower. Then, the flat body 3a that has been taken up (multilayer film) is introduced into a hot water bath 6 at a temperature equal to or lower than the melting point of the resin primarily included in each of the layers, for example, 80 to 95°C. During the introduction of the flat body 3a into the hot water bath 6, a deblocking agent represented by soybean oil, a fatty acid ester of glycerin, propylene glycol, and the like is enclosed as necessary. The flat body 3b that has been heated is then drawn upward. Then, a bubble-shaped tubular body 3c is formed from the flat body 3b by fluid air introduced between a pair of pinch rollers 7 and 8, and simultaneously biaxially stretched in the machine direction (longitudinal direction, MD) and the direction perpendicular to the machine direction (transverse direction, TD) while being cooled with a cold air ring 9 at 10 to 30°C. The stretch ratios are calculated based on the following equations, and is preferably from 2.5 to 4 times, more preferably from 2.5 to 3.5 times, particularly preferably from 2.8 to 3.5 times in both the directions:

$$\text{Longitudinal (MD) stretch ratio} = \text{take-up speed of pinch roller 8/take-up speed of pinch roller 7}$$

$$\text{Transverse (TD) stretch ratio} = \text{width of flat body 3d/width of flat body 3b}$$

Then, the flat body 3d after stretching is drawn downward, and a bubble-shaped tubular body 3e is again formed from the flat body 3d by fluid air introduced between a pair of pinch rollers 10 and 11, and then it is held inside a heat treatment pipe 12. Then, steam is blown from the nozzles 13 of the heat treatment pipe 12, alone or together with air, and the tubular body 3e during heat treatment is heat-treated preferably at 50 to 100°C, and more preferably at 60 to 95°C. The heat treatment is performed for approximately 1 to 20 seconds, and preferably for approximately 1.5 to 10 seconds. Then, the tubular body 3e during heat treatment is relaxed such that the relaxation ratios in the longitudinal direction (MD) and the transverse direction (TD) are from 2 to 40%, and preferably from 5 to 30%. The relaxation ratios in both the directions are calculated based on the following equations:

$$\text{Longitudinal (MD) relaxation ratio} = (1 - (\text{take-up speed of roller 11/take-up speed of roller 10}) \times 100 \, (\%)$$

$$\text{Transverse (TD) relaxation ratio} = (1 - (\text{width of flat body 3f/width of flat body 3d})) \times 100 \, (\%)$$

The flat body 3f after such relaxing heat treatment corresponds to the heat-shrinkable multilayer film according to an embodiment of the present invention, and is wound onto a winding roller 14.

[Examples]

The present invention will be described in further detail hereafter based on Examples and Comparative Examples, but the present invention is not limited to the following examples.

The resins used in the Examples and Comparative Examples are summarized in Table 1 below together with the abbreviations.

Table 1

| Indication | Resin | Grade | Manufacturer |
|---|---|---|---|
| Co-PET | Polyethylene terephthalate copolymer | BELLPET IFG-8L | Bell Polyester Products, Inc. |
| MB-1 | Lubricant masterbatch | MB60 | Nippon Pigment co. Ltd. |
| Ny6 | Nylon 6 | Ultramid B40L | BASF |
| Ny6-66 | Nylon 6-66 | UBE Nylon 5034 B | Ube Industries, Ltd. |
| Ny6-12 | Nylon 6-12 | Grilon CF6S | EMS-Chemie |
| A-Ny | Nylon 6I-6T | Selar PA3426 | Dupont |
| EVOH | Ethylene-vinyl alcohol copolymer | Eval G156B | Kuraray |
| LLDPE | Linear low density polyethylene | DOWLEX SC2107GC | The Dow Chemical Company |
| VLDPE | Very low density polyethylene | ATTANE 4606 GC | The Dow Chemical Company |
| MB-2 | Lubricant masterbatch | SUMIKATHENE A-26 | Sumitomo Chemical Co., Ltd. |
| ad | Acid-modified polyethylene | Admer SF730 | Mitsui Chemicals, Inc. |

Example 1

Using the apparatus illustrated in FIG. 1, resins were each extruded by a plurality of extruders 1 such that the layers have a configuration in such an order of a mixture of 88 mass% Co-PET and 12 mass% MB-1/ad/a mixture of 70 mass% Ny6-66 and 30 mass% A-Ny/EVOH/ad/a mixture of 90 mass% VLDPE and 10 mass% MB-2 from the outer side to the inner side of the film, and each of the layers has a given thickness. The melted resins were introduced into an annular die 2, melted and joined to form the layer configuration described above, and then co-extruded. The melted tubular body 3 discharged from the outlet of the annular die 2 was flattened and taken up by a pinch roller 5 while being rapidly cooled to approximately 26°C in a water bath 4 to form a flat body 3a having a width of 112 mm. Next, the flat body 3a was passed through a 90°C hot water bath 6, and then a bubble-shaped tubular body 3c was formed. The tubular body 3c was simultaneously biaxially stretched with a stretch ratio of 3.4 times in the longitudinal direction (MD) and 3.1 times in the transverse direction (TD) by the inflation method while being cooled with the air ring 9 at a temperature of 22 to 28°C. Then, the flat body 3d after stretching was introduced into a heat treatment pipe 12 having a length of approximately 2 m to form a bubble-shaped tubular body 3e. Thereafter, the tubular body 3e was heated to approximately 70°C by steam blown from nozzles 13, then heat-treated for approximately 2 seconds while being relaxed at 10% in the longitudinal direction (MD) and 10% in the transverse direction (TD), whereby a tubular body 3f (heat-shrinkable multilayer film) was produced. The total thickness of the obtained heat-shrinkable multilayer film and the thickness of each of the layers are shown in Table 2.

(Examples 2 and 3, and Comparative Examples 1 to 6)

For Examples 2 and 3, and Comparative Examples 1 to 6, the flat bodies 3f (heat-shrinkable multilayer films) were obtained in the same method as in Example 1 with the exception that the production conditions for the film were changed as described in Table 2. The total thickness of the obtained heat-shrinkable multilayer film and the thickness of each of the layers are shown in Table 2.

Evaluation of heat-shrinkable multilayer film

The puncture strength, load at 10% elongation, followable depth and followable length of the heat-shrinkable multilayer films obtained in the Examples and Comparative Examples were measured by the following method. The puncture strength was measured from the sixth layer (inside) side of the films.

(1) Method of measuring puncture strength

Using a tensilon universal material testing instrument ("RTC-1210" available from Orientec Co., Ltd.) equipped with a puncturing pin having a hemispherical tip with a radius of curvature of 0.5 mm, a fixed sample was punctured from the inner surface layer side with the puncturing pin at a speed of 50 mm/min in an atmosphere at 23°C, 50% RH. The measured value at the maximum point (N) until the film breaks was defined as the puncture strength from the inner surface layer side.

(2) Method of measuring load per unit width at 10% elongation

A strip-shaped film sample with a width of 10 mm and a length of 100 mm was mounted on a tensilon universal material testing instrument (RTC-1210, available from Orientec Co., Ltd.) such that the distance between chucks was 50 mm, retained in a thermostat at 90°C for 1 minute, and stretched in the machine direction (longitudinal direction, MD) at a tensile test speed of 500 mm/min. Then, the load at 10% elongation was measured, and a value obtained by dividing this load by the width of 10 mm was defined as the load per unit width at 10% elongation. The same measurement as described above was also performed on the direction perpendicular to the machine direction (transverse direction, TD) to determine the load per unit width at 10% elongation in the transverse direction (TD).

(3) shrinkage rate in hot water

A film sample marked at a distance of 10 cm in the machine direction (longitudinal direction, MD) and the direction perpendicular to the machine direction (transverse direction, TD) of the film was immersed in hot water adjusted to 90°C for 10 seconds. Then, it was taken out and immediately cooled with ambient-temperature water. The marked distances were then measured, and the proportions of the reduced values from 10 cm to the original length of 10 cm were indicated as percentages in the longitudinal and transverse directions, respectively. A test was performed five times (n = 5) per sample to determine an average value for each of the longitudinal direction (MD) and the transverse direction (TD), and the value was defined as the shrinkage rate in hot water.

(4) Method of evaluating followable length

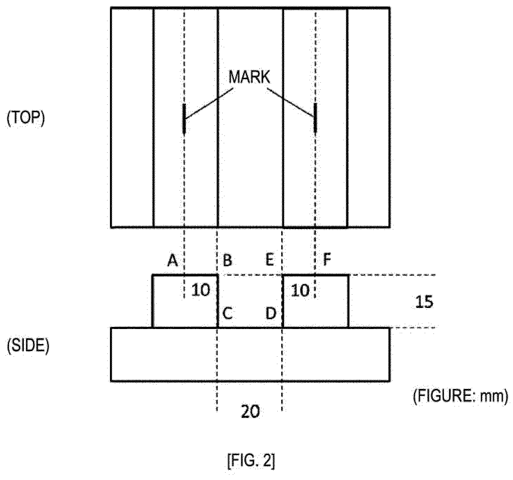

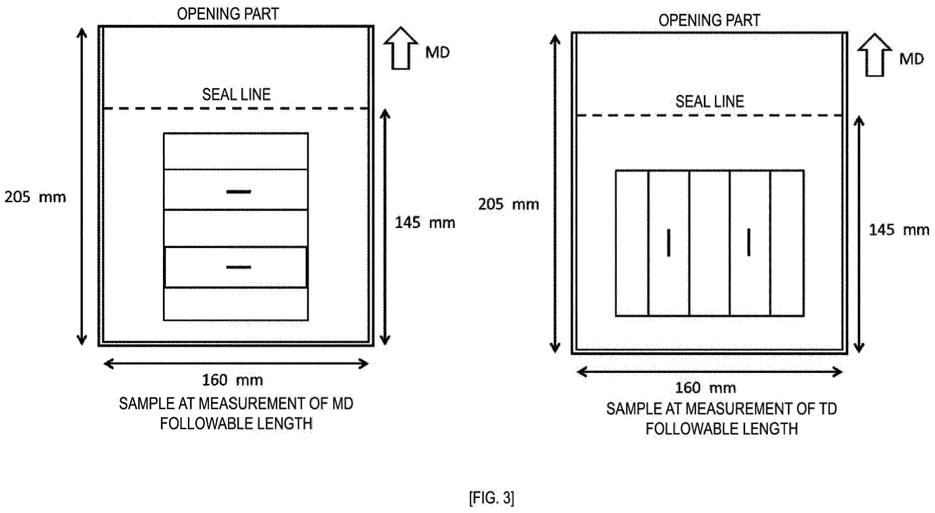

An acrylic tool as illustrated in FIG. 2 was placed in a pouch bag made by three-way sealing the inner surface layer sides of two films. The acrylic tool was placed in two ways as illustrated in FIG. 3. At measurement of the followable length in the longitudinal direction (MD), the acrylic tool was packaged such that its long side was parallel with the longitudinal direction (MD); and at measurement of the followable length in the transverse direction (TD), the acrylic tool was packaged such that its long side was parallel with the transverse direction (TD). Next, places (A and F) distant by 10 mm from both ends (B and E) of the concave part were marked. The package was immersed in hot water at 90°C for 5 seconds and then air-cooled, and the distance (length) between the marks, i.e., the distance (length) of the film that followed the concave portion was measured. The proportion of the distance (length) to the distance (length) of 70 mm (distance (length) between A and B + distance (length) between B and C+ distance (length) between C and D+ distance (length) between D and E + distance (length) between E and F) when the film completely followed the concave part was determined from the following equation (1).

$$\text{Distance (length) of the followed film}/70 \text{ mm} \times 100 \, (\%) \quad (1)$$

The determined proportions of the followings were evaluated as:

A: High followability (85% or greater),
B: Moderate followability (80% or greater and less than 85%), or
C: Low followability (less than 80%).

[Table 2]

[Table 2-1]

| | | First layer | Second layer | Third layer | Fourth layer | Fifth layer | Sixth layer | Stretching ratio (MD/TD) | Relaxation ratio (MD/TD) (%/%) |
|---|---|---|---|---|---|---|---|---|---|
| Example 1 | Resin | Co-PET + MB-1 | ad | Ny6-66 + A-Ny (70/30 wt%) | EVOH | ad | VLDPE + MB-2 | 3.4/3.1 | 10/10 |
| Example 1 | Thickness ($\mu$m) | 3 | 3 | 25 | 3 | 3 | 61 | 3.4/3.1 | 10/10 |
| Example 2 | Resin | Co-PET + MB-1 | ad | Ny6-66 + A-Ny (70/30 wt%) | EVOH | ad | VLDPE + MB-2 | 3.4/3.1 | 10/10 |
| Example 2 | Thickness ($\mu$m) | 3 | 3 | 20 | 3 | 3 | 66 | 3.4/3.1 | 10/10 |
| Example 3 | Resin | Co-PET + MB-1 | ad | Ny6-66 + A-Ny (70/30 wt%) | EVOH | ad | VLDPE + MB-2 | 3.1/3.1 | 10/10 |
| Example 3 | Thickness ($\mu$m) | 3 | 3 | 25 | 3 | 3 | 31 | 3.1/3.1 | 10/10 |
| Comparative Example 1 | Resin | Co-PET + MB-1 | ad | Ny6 + A-Ny (70/30 wt%) | EVOH | ad | LLDPE | 2.7/3.1 | 7.5/8.5 |
| Comparative Example 1 | Thickness ($\mu$m) | 3 | 3 | 29 | 3 | 3 | 49 | 2.7/3.1 | 7.5/8.5 |
| Comparative Example 2 | Resin | Co-PET + MB-1 | ad | Ny6-66 + A-Ny (85/15 wt%) | EVOH | ad | VLDPE2 + MB-2 | 3.4/3.1 | 10/10 |
| Comparative Example 2 | Thickness ($\mu$m) | 3 | 3 | 25 | 3 | 3 | 61 | 3.4/3.1 | 10/10 |
| Comparative Example 3 | Resin | Co-PET + MB-1 | ad | Ny6-66 + A-Ny (80/20 wt%) | EVOH | ad | VLDPE + MB-2 | 2.8/3.1 | 7.5/7.5 |
| Comparative Example 3 | Thickness ($\mu$m) | 3 | 1.5 | 23 | 3 | 1.5 | 58 | 2.8/3.1 | 7.5/7.5 |

(continued)

| | | Layer configuration | | | | | | Stretching ratio (MD/TD) | Relaxation ratio (MD/TD) (%/%) |
|---|---|---|---|---|---|---|---|---|---|
| | | First layer | Second layer | Third layer | Fourth layer | Fifth layer | Sixth layer | | |
| Comparative Example 4 | Resin | Co-PET + MB-1 | ad | Ny6-66 + Ny6-12 (80/20 wt%) | EVOH | ad | VLDPE + MB-2 | 3.4/3.1 | 7.5/7.5 |
| | Thickness (μm) | 3 | 3 | 25 | 3 | 3 | 61 | | |
| Comparative Example 5 | Resin | Co-PET + MB-1 | ad | Ny6-66 + Ny6-12 (70/30 wt%) | EVOH | ad | VLDPE + MB-2 | 3.4/3.1 | 7.5/7.5 |
| | Thickness (μm) | 3 | 3 | 25 | 3 | 3 | 61 | | |
| Comparative Example 6 | Resin | Co-PET + MB-1 | ad | Ny6-66 + A-Ny (55/45 wt%) | EVOH | ad | VLDPE + MB-2 | 3.4/3.1 | 7.5/7.5 |
| | Thickness (μm) | 3 | 3 | 25 | 3 | 3 | 61 | | |

[Table 2-2]

| | | Total layer thickness ($\mu$m) | Load per unit width at 10% elongation (N/mm) | | Shrinkage rate in hot water at 90°C (%) | | Puncture strength (N) | Puncture strength per unit thickness (N/$\mu$m) | Followable length (MD/TD) |
|---|---|---|---|---|---|---|---|---|---|
| | | | MD | TD | MD | TD | | | |
| Example 1 | Resin | 98 | 0.47 | 0.61 | 26 | 32 | 26.5 | 0.270 | A/A |
| | Thickness ($\mu$m) | | | | | | | | |
| Example 2 | Resin | 98 | 0.56 | 0.60 | 24 | 32 | 25.7 | 0.262 | A/A |
| | Thickness ($\mu$m) | | | | | | | | |
| Example 3 | Resin | 68 | 0.45 | 0.53 | 27 | 33 | 26.1 | 0.384 | A/A |
| | Thickness ($\mu$m) | | | | | | | | |
| Comparative Example 1 | Resin | 90 | 0.78 | 0.67 | 27 | 31 | 32.4 | 0.360 | C/B |
| | Thickness ($\mu$m) | | | | | | | | |
| Comparative Example 2 | Resin | 98 | 0.78 | 0.76 | 28 | 32 | 26.7 | 0.272 | C/C |
| | Thickness ($\mu$m) | | | | | | | | |
| Comparative Example 3 | Resin | 90 | 0.66 | 0.73 | 28 | 28 | 24.0 | 0.267 | A/C |
| | Thickness ($\mu$m) | | | | | | | | |
| Comparative Example 4 | Resin | 98 | 0.77 | 0.80 | 29 | 33 | 22.4 | 0.229 | C/C |
| | Thickness ($\mu$m) | | | | | | | | |
| Comparative Example 5 | Resin | 98 | 0.72 | 0.79 | 28 | 32 | 19.8 | 0.202 | A/C |
| | Thickness ($\mu$m) | | | | | | | | |

(continued)

| | | Total layer thickness ($\mu$m) | Load per unit width at 10% elongation (N/mm) | | Shrinkage rate in hot water at 90°C (%) | | Puncture strength (N) | Puncture strength per unit thickness (N/$\mu$m) | Followable length (MD/TD) |
|---|---|---|---|---|---|---|---|---|---|
| | | | MD | TD | MD | TD | | | |
| Comparative Example 6 | Resin | 98 | 0.43 | 0.55 | 30 | 35 | 19.5 | 0.199 | A/A |
| | Thickness ($\mu$m) | | | | | | | | |

**Claims**

1.  A heat-shrinkable multilayer film comprising at least three layers of: a surface layer (a) comprising a thermoplastic resin; an intermediate layer (b) comprising a polyamide-based resin; and a surface layer (c) comprising a sealable resin, wherein,

    (A) a load per unit width at 10% elongation is 0.70 N/mm or less in both a longitudinal direction (MD) and a transverse direction (TD) in a tensile test at 90°C, and
    (B) a puncture strength per unit thickness is 0.200 N/$\mu$m or greater.

2.  The heat-shrinkable multilayer film according to claim 1, wherein a shrinkage rate in hot water at 90°C is 33% or less in both the longitudinal direction (MD) and the transverse direction (TD), and a thickness of the intermediate layer (b) is 15 $\mu$m or greater and 50 $\mu$m or less.

3.  The heat-shrinkable multilayer film according to claim 1 or 2, wherein,
    the polyamide-based resin in the intermediate layer (b) is composed of a mixture comprising a Nylon 6-66 copolymer and an amorphous aromatic polyamide,
    the amorphous aromatic polyamide comprises a polycondensate of an acid component primarily containing isophthalic acid and terephthalic acid with an aliphatic diamine, and
    an amorphous aromatic polyamide content in the intermediate layer (b) ranges from 25 to 40 mass%.

[FIG. 1]

(TOP)

MARK

(SIDE)

A    B    E    F
10        10
C    D
15

20

(FIGURE: mm)

[FIG. 2]

OPENING PART

← MD

205 mm

SEAL LINE

145 mm

160 mm

SAMPLE AT MEASUREMENT OF MD
FOLLOWABLE LENGTH

OPENING PART

← MD

205 mm

SEAL LINE

145 mm

160 mm

SAMPLE AT MEASUREMENT OF TD
FOLLOWABLE LENGTH

[FIG. 3]

EP 3 804 980 A1

## INTERNATIONAL SEARCH REPORT

| International application No. |
| --- |
| PCT/JP2019/016991 |

### A.  CLASSIFICATION OF SUBJECT MATTER
Int.Cl.  B32B7/022(2019.01)i, B32B27/34(2006.01)i, B65D65/40(2006.01)i,
C08L77/00(2006.01)i

According to International Patent Classification (IPC) or to both national classification and IPC

### B.  FIELDS SEARCHED

Minimum documentation searched (classification system followed by classification symbols)
Int.Cl.  B32B7/022, B32B27/34, B65D65/40, C08L77/00

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C.  DOCUMENTS CONSIDERED TO BE RELEVANT

| Category* | Citation of document, with indication, where appropriate, of the relevant passages | Relevant to claim No. |
| --- | --- | --- |
| X<br>Y | JP 2013-516338 A (KUREHA CORPORATION) 13 May 2013, claim 1, paragraphs [0061], [0070], table 1<br>& US 2013/0136906 A1, claim 1, paragraphs [0080]-[0089], [0098], table 1 & EP 2521651 A1 & AU 2010340544 A & CN 102781666 A | 1-3<br>1-3 |
| Y | WO 2009/154263 A1 (UBE INDUSTRIES, LTD.) 23 December 2009, abstract, page 4, lines 2-5, page 14, lines 1-6, 9-26, page 19, line 15 to page 26, line 3, table 1 (Family: none) | 1-3 |

☒  Further documents are listed in the continuation of Box C.          ☐  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 07.06.2019 | 18.06.2019 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/016991 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 1-297243 A (MITSUBISHI PLASTICS INC.) 30 November 1989, entire text (Family: none) | 1-3 |
| A | JP 5-16306 A (MITSUBISHI PLASTICS INC.) 26 January 1993, entire text (Family: none) | 1-3 |
| A | WO 2005/102695 A1 (ASAHI KASEI LIFE & LIVING CORPORATION) 03 November 2005, entire text (Family: none) | 1-3 |
| A | US 2004/0043233 A1 (CRYOVAC, INC.) 04 March 2004, entire text & EP 1393897 A2 & AU 2003236479 A & CA 2438265 A1 | 1-3 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002220504 A